(19) Europäisches Patentamt / European Patent Office / Office européen des brevets

(11) **EP 3 151 018 B1**

(12) **EUROPEAN PATENT SPECIFICATION**

(45) Date of publication and mention
of the grant of the patent:
**19.12.2018 Bulletin 2018/51**

(51) Int Cl.:
*G01P 15/125* (2006.01)   *G01P 15/08* (2006.01)

(21) Application number: **16190692.0**

(22) Date of filing: **26.09.2016**

(54) **MEMS SENSOR WITH REDUCED CROSS-AXIS SENSITIVITY**

MEMS-SENSOR MIT REDUZIERTER QUERACHSENEMPFINDLICHKEIT

CAPTEUR MEMS À SENSIBILITÉ DE L'AXE TRANSVERSAL RÉDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2015 US 201514869355**

(43) Date of publication of application:
**05.04.2017 Bulletin 2017/14**

(73) Proprietor: **NXP USA, Inc.
Austin TX 78735 (US)**

(72) Inventor: **Naumann, Michael
5656 AG Eindhoven (NL)**

(74) Representative: **Pomper, Till
NXP Semiconductors
Intellectual Property Group
134 avenue Eisenhower
BP 72329
31023 Toulouse Cedex 1 (FR)**

(56) References cited:
**EP-A1- 2 479 580       WO-A1-2013/050752
WO-A1-2013/104828**

**Description**

TECHNICAL FIELD OF THE INVENTION

The present invention relates generally to microelectromechanical systems (MEMS) sensors. More specifically, the present invention relates to a MEMS sensor with reduced cross-axis sensitivity.

BACKGROUND OF THE INVENTION

Microelectromechanical Systems (MEMS) sensors are widely used in applications such as automotive, inertial guidance systems, household appliances, protection systems for a variety of devices, and many other industrial, scientific, and engineering systems. Such MEMS sensors are used to sense a physical condition such as acceleration, pressure, angular rotation, or temperature, and to provide an electrical signal representative of the sensed physical condition.

Capacitive-sensing MEMS designs are highly desirable for operation in both acceleration and angular rotation environments and in miniaturized devices, due to their relatively low cost. Capacitive accelerometers sense a change in electrical capacitance, with respect to acceleration, to vary the output of an energized circuit. One common form of accelerometer is a two layer capacitive transducer having a "teeter-totter" or "see saw" configuration. This commonly utilized transducer type uses a movable element or plate that rotates under Z-axis acceleration above a substrate. The accelerometer structure can measure two distinct capacitances to determine differential or relative capacitance. For instance, WO 2013 / 104 928 A1 describes a MEMS structure, which comprises an seismic mass that is suspended to an anchor via side arms symmetrically set in respect to opposite sides of the anchor and two springs coupled between respective ends of the side arms and the seismic mass to enable pivoting around an axis of rotation.

For instance, WO 2013 / 050 752 A1 describes an accelerometer with a proof mass supported for movement relative to a support by a plurality of mounting legs, a plurality of fixed capacitor fingers associated with the support and a plurality of movable capacitor fingers associated with the proof mass. The mounting legs are of serpentine shape, wherein each mounting leg comprises at least a first generally straight section, a second generally straight section, and an end section of generally U-shaped form interconnecting the first and second generally straight sections.

For instance, EP 2 479 580 A1 describes a MEMS sensor with a movable proof mass supported by a suspension anchor and a first folded torsion spring and a second folded torsion spring interconnecting the movable proof mass with the suspension anchor to suspend the movable proof mass. The folded torsion springs are oriented relative to one another in rotational symmetry about a centroid of the suspension anchor.

BRIEF DESCRIPTION OF THE DRAWINGS

The accompanying figures in which like reference numerals refer to identical or functionally similar elements throughout the separate views, the figures are not necessarily drawn to scale, and which together with the detailed description below are incorporated in and form part of the specification, serve to further illustrate various embodiments and to explain various principles and advantages all in accordance with the present invention.

FIG. 1 shows a top view of a MEMS sensor included in a device in accordance with an embodiment;
FIG. 2 shows a side sectional view of the MEMS sensor along section lines 2-2 of FIG. 1;
FIG. 3 shows a side sectional view of the MEMS sensor along section lines 3-3 of FIG. 1;
FIG. 4 shows an enlarged top view of a portion of the MEMS sensor of FIG. 1; and
FIG. 5 shows a greatly enlarged top view a folded torsion spring of the MEMS sensor of FIG. 1.

DETAILED DESCRIPTION

In overview, the present disclosure concerns a microelectromechanical systems (MEMS) sensor with reduced cross-axis sensitivity. More particularly, the MEMS sensor includes a two layer capacitive transducer having a movable element that rotates under Z-axis acceleration above a substrate. The MEMS sensor includes a single central anchor and multi-segment folded torsion springs suspended above the substrate and positioned as far away from the central anchor as possible. Rigid beams suspended above the substrate connect the folded torsion springs to the central anchor. Additionally, the ends of the spring turns have a greater width than the remaining segments of the spring. Such a MEMS sensor having a single central anchor, folded torsion springs positioned as far away from the central anchor as possible, rigid suspended beams interconnected between the torsion springs and the central anchor, and a suitably selected width of the ends of the spring turns results in increased stiffness in both the X- and Y- directions to thereby achieve reduced sensitivity to cross-axis accelerations in the X- and Y-directions. The MEMS sensor can be manufactured using existing MEMS fabrication processes to achieve design objectives of reduced sensitivity to cross-axis acceleration, improved accuracy, compact size, and cost effective manufacturing.

The instant disclosure is provided to further explain in an enabling fashion the best modes, at the time of the application, of making and using various embodiments in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

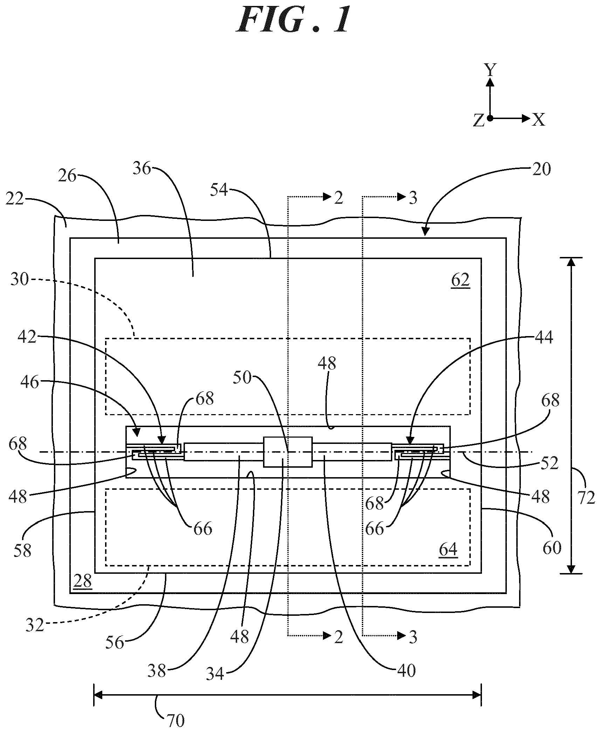

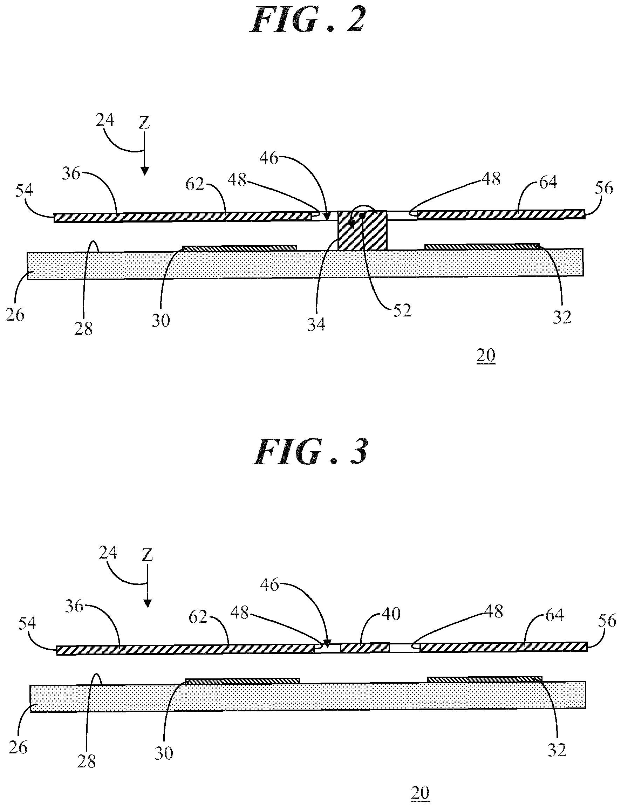

Referring to FIGs. 1-3, FIG. 1 shows a top view of a MEMS sensor 20 included in a device 22 in accordance with an embodiment. FIG. 2 shows a side sectional view of MEMS sensor 20 along section lines 2-2 of FIG. 1, and FIG. 3 shows a side sectional view of MEMS sensor 20 along section lines 3-3 of FIG. 1. MEMS sensor 20, in the form of a an accelerometer, is adapted to sense Z-axis acceleration, represented by an arrow 24 in FIGs. 2 and 3, and is constructed as a "teeter-totter" type sensor. Device 22 can include any of a plurality of devices in which acceleration measurements may be needed. These devices include, for example, automotive systems, inertial guidance systems, household appliances, protection systems for a variety of devices, portable computing and telecommunication devices, handheld game controllers, and many other industrial, scientific, and engineering systems.

MEMS sensor 20 includes a substrate 26 having a generally planar surface 28. Electrode elements 30 and 32 and a suspension anchor 34 are formed on planar surface 28 of substrate 26. A movable element 36, sometimes referred to as a movable mass or a proof mass, is positioned in spaced apart relationship above planar surface 28 of substrate 26. More particularly, MEMS sensor 20 includes a first rigid beam 38 and a second rigid beam 40 coupled to suspension anchor 34 and positioned in spaced apart relationship above planar surface 28 of substrate 26. With particular reference to FIG. 3, the cross sectional side view of MEMS sensor 20 shows second rigid beam 40 overlaying and spaced apart from surface 28 of substrate 26 so that it does not contact substrate 26. It should be observed that electrode elements 30, 32 are obscured from view in FIG. 1 by the overlying movable elements. As such, electrode elements 30, 32 are represented in FIG. 1 by dashed line boxes.

A first folded torsion spring 42 interconnects movable element 36 with first rigid beam 38 and a second folded torsion spring 44 interconnects movable element 36 with second rigid beam 40 so that movable element 36, first and second rigid beams 38, 40, and first and second folded torsion springs 42, 44 are suspended above substrate 26. The components of MEMS sensor 20 may be formed using existing and upcoming MEMS fabrication design rules and processes that include, for example, deposition, patterning, and etching. It should be understood that the use of relational terms used herein, such as first and second, top and bottom, and the like are used solely to distinguish one from another entity or action without necessarily requiring or implying any actual such relationship or order between such entities or actions.

As shown, an opening 46 extends through movable element 36 and is delineated by an inner edge portion 48 of movable element 36. Suspension anchor 34 is positioned at an approximate center 50 of opening 46 along an axis of rotation 52 of movable element 36 between a first end 54 and a second end 56 of movable element 36. Additionally, suspension anchor 34 is centered between a first side 58 and a second side 60 of movable element 36, where first and second sides 58, 60 extend between first and second ends 54, 56 and are oriented substantially perpendicular to axis of rotation 52.

When intended for operation as a teeter-totter type accelerometer, a first section 62 of movable element 36 on one side of axis of rotation 52 is formed with relatively greater mass than a second section 64 of movable element 36 on the other side of axis of rotation 52. In an exemplary embodiment, the greater mass of first section 62 may be created by offsetting axis of rotation 52 such that first section 62 is longer than second section 64. Although, the difference in mass between first section 62 and second section 44 is formed by offsetting axis of rotation 62, in alternative embodiments, this difference in mass may be accomplished by adding mass to first section 62 through an additional layer of material, by removing mass from second section 64 relative to first section 62, and so forth. Movable element 36 is adapted for rotation about axis of rotation 52 in response to acceleration 24, thus changing its position relative to the underlying sensing electrode elements 30, 32. This change in position results in a set of capacitances whose difference, i.e., a differential capacitance, is indicative of the magnitude of acceleration 24.

First and second folded torsion springs 42, 44 have a substantially equivalent shape and similar size. That is, each of first and second folded torsion springs 42, 44 includes multiple segments 66 aligned substantially parallel to axis of rotation 52. Segments 66 of each of springs 42, 44 are linked together in serpentine fashion by bar elements 68 to produce the "folded" configuration of torsion springs 42, 44. In the illustrated example, each of first and second torsion springs 42, 44 includes three segments 66. However, alternative folded configurations may include more than three segments 66.

Prior art MEMS sensor configurations, based on a teeter-totter like principle of operation are often not optimized regarding their cross-axis sensitivity. Cross-axis sensitivity refers to the sensor output on the sensing axis being subjected to acceleration components from an axis that is perpendicular to the sensing axis. A MEMS sensor that is adapted to sense acceleration along a Z-axis has two cross-axis sensitivities. The two cross-axis sensitivities can be referred to as $S_{ZX}$ and $S_{ZY}$ where the first subscript refers to the sense axis (Z) and the second subscript refers to the off-axis direction (X or Y). Thus, lateral accelerations in the X-direction and/or the Y-direction acting parallel to the surface of the substrate can cause noticeable displacement of the movable element in the lateral X- and/or Y-directions.

This susceptibility to cross-axis accelerations can cause error on the sensor output. More critically, however, this susceptibility to cross-axis accelerations can cause reliability related problems in terms of stiction, where stiction is the temporary or permanent adhesion of the movable element to the substrate. Stiction induced device failure can occur under the condition of a multi-directional overload situation that includes both vertical (Z-direction) acceleration content and lateral (X- and/or Y- direction) acceleration content. Under such a multi-directional overload situation, the vertical acceleration content acting in the Z-direction perpendicular to the surface of the substrate pushes the movable element in contact with the substrate or with one or more travel stops on the surface of the substrate. At the same time, the lateral acceleration content in the X- and/or Y- directions can cause the movable element to slide over the substrate depending upon the magnitude of the lateral acceleration components, upon friction forces between the substrate and the movable element, and upon the stiffness in the lateral directions. Experimental results show that increased slide motion of the movable element when the movable element contacts the substrate and/or the travel stops can significantly increase the magnitude of adhesion forces between the substrate and the movable element thus leading to stiction failures of MEMS sensors.

In accordance with a particular embodiment, the cross-axis sensitivity of MEMS sensor 20 is reduced relative to prior art designs by increasing the device stiffness in both lateral (X- and Y-) directions. The increased device stiffness effectively reduces slide displacement of the movable element during a multi-directional overload condition to largely prevent stiction, and stiction induced device failure situations. The device stiffness is increased by combining a number of constructive measures, discussed in greater detail below.

With continued reference to FIG. 1, movable element 36 is characterized by a width 70 extending between first and second opposing sides 58, 60 of movable element 36. Movable element 36 is further characterized by a length 72 extending between first and second ends 54, 56 of movable element 36. In an embodiment, width 70 is greater than length 72. More particularly, an aspect ratio of width 70 to length 72 can be defined as width 70 divided by length 72. The aspect ratio with width 70 being greater than length 72 is therefore greater than one. In some embodiments, a preferred range for the aspect ratio is between 1.2 and 2.

The aspect ratio determines how far away the center of mass of the heavy end, i.e., first section 62, will be from axis of rotation 52. The drive torque in response to Z-axis acceleration 24 can be characterized by the mass of the heavier end (e.g., first section 62) multiplied by the magnitude of Z-axis acceleration 24 multiplied by the lever, where the lever is the distance between the center of mass of the heavier first section 62 to axis of rotation 52. By choosing an aspect ratio (width 70 divided by length 72) that is greater than one, the lever can be kept relatively low. Therefore, the torque that could cause a cross-axis movement in the event of cross-axis acceleration in the X-direction can also be kept low. Thus, by making movable mass 36 wider instead of longer to increase the mass of first section 62, the stiffness of first and second folded torsion springs 42, 44 can be increased to reduce cross-axis sensitivity.

In embodiments where the aspect ratio is in the range of 1.2 and 2, a desired spring stiffness and sensitivity to Z-axis acceleration 24 may be achieved. In other embodiments where the aspect ratio is in excess of two, a desired spring stiffness may still be achieved. However, the sensitivity of MEMS sensor 20 to Z-axis acceleration 24 may drop because the electrode regions close to the axis of rotation 52 do not contribute much to the sensitivity of MEMS sensor 20. That is, due to the close proximity of electrodes 30, 32 to axis of rotation 52 in a configuration with a very large aspect ratio, the change in gap width, and hence the capacitance change, between movable element 36 and the underlying electrodes 30, 32 will change very little.

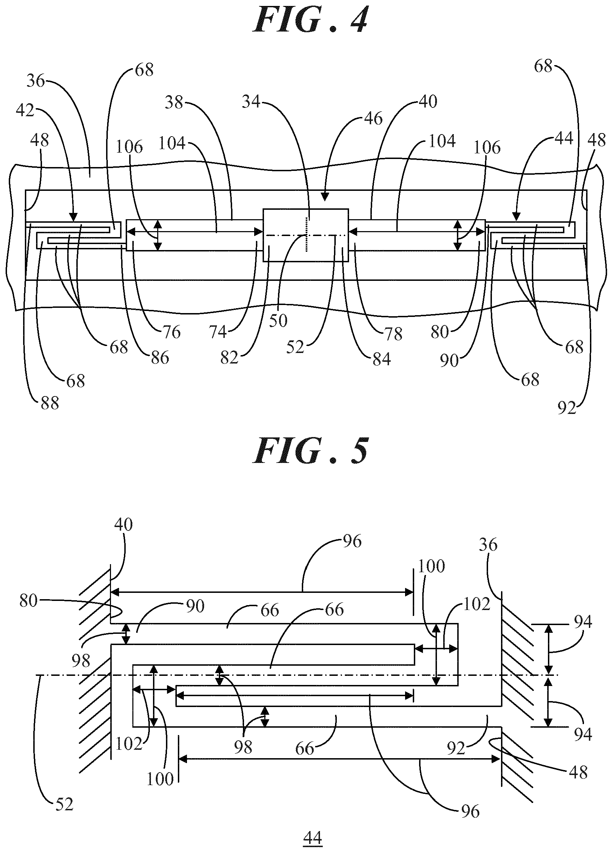

Referring now to FIGs. 4 and 5, FIG. 4 shows an enlarged top view of a portion of MEMS sensor 20 (FIG. 1), and FIG. 5 shows a greatly enlarged top view of one of the folded torsion springs, e.g., second folded torsion spring 44, of MEMS sensor 20 (FIG. 1). More particularly, FIG. 4 shows a portion of movable element 36 surrounding opening 46 extending through movable element 36. Additionally, FIG. 4 shows suspension anchor 34, first and second rigid beams 38, 40, and first and second folded torsion springs 42, 44 residing within opening 46.

In the illustrated configuration, first rigid beam 38 has a first beam end 74 and a second beam end 76. Similarly, second rigid beam 40 has a third beam end 78 and a fourth beam end 80. First beam end 74 of first rigid beam 38 is coupled to a first side 82 of suspension anchor 34 and third beam end 78 of second rigid beam 40 is coupled to a second side 84 of suspension anchor 34, where second side 84 is opposite first side 82. First folded torsion spring 42 has a first spring end 86 coupled to second beam end 76 of first rigid beam 38 and a second spring end 88 coupled to inner edge portion 48 of movable element 36. Likewise, second folded torsion spring 44 has a third spring end 90 coupled to fourth beam end 80 of second rigid beam 40 and a fourth spring end 92 coupled to inner edge portion 48 of movable element 36.

In some embodiments, second folded torsion spring 44 may be generally oriented in rotational symmetry relative to first folded torsion spring 42 about center 50 of suspension anchor 34. The term "rotational symmetry" utilized herein refers to an arrangement in which second folded torsion spring 44 is rotated about center 50 relative to first folded torsion spring 42, but "still looks the same" as first folded torsion spring 42. That is, every point on first folded torsion spring 42 has a mating point on second folded torsion spring 44 that is the same distance from center 50, but in the opposite direction.

In the illustrated embodiment, first and second spring ends 86, 88 of first folded torsion spring 42 are not aligned with one another. Rather, they are laterally displaced away from one another relative to axis of rotation 52. Likewise, third and fourth spring ends 90, 92 of second folded torsion spring 44 are not aligned with one another. Instead, they are laterally displaced away from one another in the Y-direction relative to axis of rotation 52.

MEMS sensor applications are typically subject to temperature coefficient of offset (TCO) specifications. TCO is a measure of how much thermal stresses can affect the performance of a semiconductor device, such as a MEMS sensor. A high TCO indicates correspondingly high thermally induced stress, or a MEMS device that is very sensitive to such a stress. The packaging of MEMS sensor applications often uses materials with dissimilar coefficients of thermal expansion. Thus, an undesirably high TCO can develop during manufacture or operation. In addition, stresses can result from soldering the packaged semiconductor device onto a printed circuit board in an end application. The combination of stresses and the material properties of the MEMS device can result in strain, i.e., deformation, in substrate 26. Suspension anchor 34 can also experience this strain, or deformation, via the underlying substrate 26. The strain in suspension anchor 34 can cause some rotation of movable element 36 about axis of rotation 52 resulting in measurement inaccuracies, thus adversely affecting the capacitive output of MEMS sensor 20.

Due to the rotationally symmetric arrangement of first and second torsion springs 42, 44, first spring end 86 of first torsion spring 42 coupled to first beam 38 and fourth spring end 90 of second torsion spring 44 coupled to second beam 40 are displaced away from and on opposite sides of axis of rotation 52 by an equivalent distance 94. Thus, any strain experienced through suspension anchor 34 and first beam 38 at first spring end 86 of first folded torsion spring 42 is balanced by a generally equal and opposite strain experienced through suspension anchor 34 and second beam 40 at fourth spring end 92 of second folded torsion spring 44. This rotationally symmetric arrangement may effectively minimize or even cancel measurement error due to temperature coefficient of offset (TCO) effects.

As mentioned previously, each of first and second folded torsion springs 42, 44 includes multiple segments 66 and bar elements 68 linking together segments 66 in a serpentine manner to produce the "folded" configuration of torsion springs 42, 44. As particularly illustrated in the greatly enlarged top view of second folded torsion spring 44 in FIG. 4, each of segments 66 is characterized by a first length 96 and a first width 98 and each of bar elements 68 is characterized by a second length 100 and a second width 102.

First length 96 of segments 66 is aligned substantially parallel to axis of rotation 52 so that first width 98 of segments 66 is oriented substantially perpendicular to axis of rotation 52.

Conversely, second length 100 of bar elements 68 is oriented approximately perpendicular to first length 96 of segments 66 and therefore to axis of rotation 52, and second width 102 of bar elements 68 is oriented substantially parallel to axis of rotation 52. As such, segments 66 and bar elements 68 of first and second folded torsion springs 42, 44 are oriented parallel to planar surface 28 (FIG. 1) of substrate 26 (FIG. 1).

It should be readily observed that second length 100 of each of bar elements 68 is considerably less than first length 96 of each of segments 66. Thus, the material properties of bar elements 68 do not significantly contribute to the torsion capability of first and second folded torsion springs 42, 44. Rather it is the collective combination of each of segments 66 arranged parallel to axis of rotation 52 that produces a desired effect of enabling rotation of movable element 36 about axis of rotation 52 in response to Z-axis acceleration 24 (FIG. 2). And, indeed, the summation of first lengths 96 of each of segments 66 can yield approximately the same rotational stiffness as a straight bar torsion spring of an equivalent total length, as demonstrated below.

Designating first length 96 of each of segments 66 of one of torsion springs 42, 44 as $L_1$ and assuming that a straight bar torsion spring has a total length, $L_2$, as the collective combination of first lengths 96 each of segments 66 can be represented by the following equation:

$$L_2 = 3 * L_1 \qquad\qquad (1)$$

In equation (1), the length, $L_2$, of the straight bar torsion spring is three times the length, $L_1$, of each of segments 66, assuming that the length, $L_1$, of each of segments 66 is the same.

In order to achieve the same rotational stiffness, c_rot, between the straight bar torsion spring and one of folded torsion springs, three of segments 66 having first length 96, $L_1$ are combined into one of folded torsion springs 42, 44. The following equations represent an analytical approximation of the rotational stiffness, $c\_rot_1$, of one of folded torsion springs 42, 44 having three segments 66 and the rotational stiffness, $c\_rot_2$, of one straight bar torsion spring.

$$c\_rot_1 = \frac{\frac{G*I_t}{L_1}}{3} = \frac{G*I_t}{3*L_1} \qquad\qquad (2)$$

$$c\_rot_2 = \frac{G*I_t}{L_2} = \frac{G*I_t}{3*L_1} \tag{3}$$

In equations (2) and (3), G corresponds to the shear modulus of the material and $I_t$ corresponds to the area moment of inertial regarding/for torsion. As shown in equation (3), $L_2$ can be substituted with $3*L_1$ to demonstrate that the rotational stiffness, $c\_rot_1$, of one of folded torsion springs 42, 44 is equivalent to the rotational stiffness, $c\_rot_2$, of a straight bar torsion spring.

However, the implementation of folded torsion springs 42, 44 within MEMS sensor 22 can achieve advantages over a straight bar torsion spring in terms of a resistance against bending deformation, also referred to herein as lateral bending. The following equations represent an analytical approximation of the lateral bending stiffness, $c\_bend_1$, of one of folded torsion springs 42, 44 having three segments 66 of length, $L_1$, and the lateral bending stiffness, $c\_bend_2$, of one straight bar torsion spring of length $L_2 = 3*L_1$.

$$c\_bend_1 = \frac{\frac{12*E*I_b}{L_1^3}}{3} = \frac{12*E*I_b}{3*L_1^3} \tag{4}$$

$$c\_bend_2 = \frac{12*E*I_b}{L_2^3} = \frac{12*E*I_b}{(3*L_1)^3} = \frac{1}{9} * \frac{12*E*I_b}{3*L_1^3} \tag{5}$$

In equations (4) and (5), E corresponds to the elastic modulus and $I_b$ corresponds to the area moment of inertia regarding/for bending. Further equation (4) shows that the lateral bending stiffness is divided by 3 since three of segments 66 are attached in series to form one of folded torsion springs 42, 44. As shown in equation (5), $L_2$ can again be substituted with $3*L_1$. Thus, as shown in equation (5), the lateral stiffness, $c\_bend_2$, of the straight bar torsion spring is only one ninth the lateral stiffness, $c\_bend_1$, of one of folded torsion springs 42, 44. Accordingly, the inclusion of folded torsion springs 42, 44 within MEMS 20 can yield a desired rotational stiffness while concurrently reducing the potential for bending deformation in the event of cross-axis acceleration in the Y-direction.

Although second length 100 of each of bar elements 68 is significantly less than first length 96 of each of segments 66, the opposite is true regarding widths 98, 102. That is, second width 102 of each of bar elements 68 is greater than first width 98 of each of segments 66. The greater widths 102 of the spring turns (i.e., bar elements 68) of first and second folded springs 42, 44 can further increase the stiffness of first and second folded torsion springs 42, 44 in both lateral (X- and Y-) directions to effectively reduce or largely prevent lateral movement, i.e., slide displacement, of movable element 36 during a multi-directional overload condition.

With continued reference to FIGs. 4 and 5, each of first and second rigid beams 38, 40 is characterized by a beam length 104 aligned with axis of rotation 52 and a beam width 106 that is perpendicular to axis of rotation 52. In some embodiments, beam length 104 may be greater than first length 96 of each of segments 66 of first and second folded torsion springs 42, 44. Beam width 106 is sufficiently great to provide the rigidity needed to effectively reduce or largely prevent lateral movement, i.e., slide displacement, of movable element 36 during a multi-directional overload condition.

Beam length 104 of first and second rigid beams 38, 40 arises out of several design parameters. By way of example, width 70 (FIG. 1) of movable mass 36 is determined depending upon available space, required sensitivity, and so forth where width 70 is greater than length 72 (FIG. 1) of movable mass 36. The required size of suspension anchor 34 is determined based on mechanical stability considerations depending, at least in part, on the fabrication process. The design (e.g., spring parameters such as spring length, number of turns, and so forth) of first and second folded torsion springs 42, 44 is determined to produce the desired sensitivity of MEMS sensor 20 (FIG. 1) in the sense direction. The remaining gap between each of first and second folded torsion springs 42, 44 and suspension anchor 34 is filled with the suspended first and second rigid beams 38, 40.

Depending upon beam length 104, beam width 106 is determined in such a way that first and second rigid beams 38, 40 can be considered "rigid" as compared to first and second folded torsion springs 42, 44. That is, the stiffness of first and second rigid beams 38, 40 in the lateral (X- and Y-) directions has to be larger than the stiffness of first and second folded torsion springs 42, 44 in the lateral (X- and Y-) directions. In an example, consider that first and second rigid beams 38, 40 should be more than one hundred times stiffer in the lateral (X- and Y-) directions relative to first and second folded torsion springs 42, 44. Thus, the following simplified equations apply in order to estimate a minimum value for beam width 106:

$$c_{beam} = \frac{E*T*W_{beam}^3}{4*L_{beam}^3} \qquad (6)$$

$$c_{beam} = 100 * c_{tors} \qquad (7)$$

$$100 * c_{tors} = \frac{E*T*W_{beam}^3}{4*L_{beam}^3} \qquad (8)$$

$$W_{beam} > \sqrt[3]{\frac{100*c_{tors}*4*L_{beam}^3}{E*T}} \qquad (9)$$

In equations (6), (7), (8), and (9), $c_{tors}$ is the lateral stiffness of each of first and second folded torsion springs 42, 44, $c_{beam}$ is the lateral stiffness of first and second rigid beams 38, 40, $L_{beam}$ is beam length 104, $W_{beam}$ is beam width 106, $E$ corresponds to the Young's Modulus, and $T$ to the thickness of the functional layer (i.e., thickness of the sensor elements). Thus, for a given beam length 104 of each of first and second rigid beams 38, 40, and a given stiffness ratio of how much stiffer first and second rigid beams 38, 40 should be than first and second torsion beams 42, 44 (one hundred in this example), the minimum required beam width 106 can be estimated.

Accordingly, due to a suitably determined rigidity of first and second rigid beams 38, 40 relative to first and second folded torsion springs 42, 44, first and second rigid beams 38, 40 can function cooperatively with the relatively thick bar elements 68 of torsion springs 42, 44 to reduce or largely prevent lateral movement of movable element 36 during a multi-directional overload condition.

In summary, embodiments of a MEMS sensor having reduced cross-axis sensitivity have been described. In an embodiment, a MEMS sensor a substrate, a movable element positioned in spaced apart relationship above a surface of the substrate, and a suspension anchor formed on the surface of the substrate. The MEMS sensor further comprises a first rigid beam coupled to the suspension anchor and positioned in spaced apart relationship above the surface of the substrate, a second rigid beam coupled to the suspension anchor and positioned in spaced apart relationship above the surface of the substrate, the first and second rigid beams being aligned with one another along an axis of rotation of the movable element, a first torsion spring interconnecting the movable element with the first rigid beam, and a second torsion spring interconnecting the movable element with the second rigid beam.

Embodiments described herein include a two layer capacitive MEMS sensor having a movable element that rotates under Z-axis acceleration above a substrate. The MEMS sensor includes a single central anchor and multi-segment folded torsion springs suspended above the substrate and positioned as far away from the central suspension anchor as possible. Rigid beams suspended above the substrate connect the folded torsion springs to the central suspension anchor. Additionally, the ends of the spring turns have a greater width than the remaining segments of the spring. Such a MEMS sensor having a single central anchor, folded torsion springs positioned as far away from the central anchor as possible, rigid suspended beams interconnected between the torsion springs and the central anchor, a suitably selected width of the ends of the spring turns, and an aspect ratio of the width to the length of the movable element that is greater than one results in increased stiffness in both the X- and Y- directions to thereby achieve reduced sensitivity to cross-axis accelerations in the X- and Y-directions. The MEMS sensor can be manufactured using existing MEMS fabrication processes to achieve design objectives of reduced sensitivity to cross-axis acceleration, improved accuracy, compact size, and cost effective manufacturing.

**Claims**

1.  A microelectromechanical systems, MEMS, sensor comprising:

    a substrate (26);
    a movable element (36) positioned in spaced apart relationship above a surface (28) of said substrate (26);
    a suspension anchor (34) formed on said surface (28) of said substrate (26);
    a first rigid beam (38) coupled to said suspension anchor (34) and positioned in spaced apart relationship above said surface (28) of said substrate (26);
    a second rigid beam (40) coupled to said suspension anchor (34) and positioned in spaced apart relationship above said surface (28) of said substrate (26), said first and second rigid beams (38, 40) being aligned with one another along an axis of rotation (52) of said movable element (36);

a first torsion spring (42) interconnecting said movable element (36) with said first rigid beam (38); and

a second torsion spring (44) interconnecting said movable element (36) with said second rigid beam (40),

wherein said first torsion spring (42) is a first folded torsion spring, wherein said second torsion spring (44) is a second folded torsion spring, each of said first and second torsion springs (42, 44) being arranged generally parallel to said axis of rotation (52),

**characterized in that**

each of said first and second folded torsion springs (42, 44) further comprises multiple segments (66) having a first length (96) and a first width (98), said first length (96) being aligned substantially parallel to said axis of rotation (52); and bar elements (68) linking together said multiple segments (66) in serpentine fashion,

each of said first and second rigid beams (38, 40) has a beam length (104) and a beam width (106), said beam length (104) being aligned parallel to said axis of rotation (52), said beam width (106) being perpendicular to axis of rotation (52), and said beam length (104) being greater than said first length (96) of said multiple segments (66), and

said beam width (106) is sufficiently great to provide the rigidity needed to effectively reduce or largely prevent lateral movement during a multi-directional overload condition.

2. The MEMS sensor of claim 1 wherein said suspension anchor (34) is located at said axis of rotation (52) and is centered between first and second sides (58, 60) of said movable element (36), said first and second sides (58, 60) being oriented substantially perpendicular to said axis of rotation (52).

3. The MEMS sensor of claim 1 or claim 2, wherein:

said movable element (36) includes an opening (46) extending through said movable element (36), said opening (46) being delineated by an inner edge portion (48) of said movable element (36);

said suspension anchor (34) is centered in said opening (46);

said first rigid beam (38) has a first end (74) and a second end (76), said first end (74) being coupled to a first side (82) of said suspension anchor (34);

said second rigid beam (40) has a third end (78) and a fourth end (80), said third end (78) being coupled to a second side (84) of said suspension anchor (34), said second side (84) being opposite said first side (82);

said first torsion spring (42) has a first spring end (86) coupled to said second end of said first rigid beam (38) and a second spring end (88) coupled to said inner edge portion (48) of said movable element (36); and

said second torsion spring (44) has a third spring end (90) coupled to said fourth end (80) of said second rigid beam (40) and a fourth spring end (92) coupled to said inner edge portion (48) of said movable element (36).

4. The MEMS sensor of any one of the claims 1 to 3,

wherein said bar elements (68) have a second length (100) and a second width (102), said second length (100) of said bar elements (68) being oriented approximately perpendicular to said first length (96) of said multiple segments (66), said second length (100) being less than said first length (96), and said second width (102) being greater than said first width (98).

5. The MEMS sensor of claim 4, wherein said second width (102) of said bar elements (68) is oriented substantially parallel to said axis of rotation (52).

6. The MEMS sensor of claim 4 or claim 5, wherein said first width (98) and said second width (102) are oriented substantially parallel to said surface (28) of said substrate (26).

7. The MEMS sensor of any one of the claims 1 to 6, wherein:

said first folded torsion spring (42) has a first spring end (86) coupled to said first rigid beam (38); and

said second folded torsion spring (44) has a third spring end (90) coupled to said second rigid beam (40), each of said first and second spring ends (86, 88) being displaced away from and on opposite sides of said axis of rotation (52) by a substantially equivalent distance.

8. The MEMS sensor of any one of the claims 1 to 7, wherein:

each of said first and second rigid beams (38, 40) has a first lateral stiffness characterizing one of inflexibility and rigidity of said first and second rigid beams (38, 40) in a direction substantially parallel to said surface (28) of said substrate (26); and

each of said first and second torsion springs (42, 44) has a second lateral stiffness characterizing one of inflexibility and rigidity of said first and second torsion springs (42, 44) in said direction substantially parallel to said surface (28) of said substrate (26), said first lateral stiffness being greater than said second lateral stiffness.

9. The MEMS sensor of any one of the claims 1 to 8, wherein:

said axis of rotation (52) is positioned between and oriented substantially parallel to first and second ends (54, 56) of said movable element (36);

said movable element (36) includes first and second opposing sides (58, 60) interconnected between said first and second ends (54, 56) and oriented substantially perpendicular to said axis of rotation (52); and

said movable element (36) is **characterized by** a width (70) extending between said first and second opposing sides (58, 60) and a length (72) extending between said first and second ends (58, 60), wherein said width (70) is greater than said length (72).

10. The MEMS sensor of claim 9, wherein an aspect ratio of said width (70) to said length (72) is in a range of 1.2-2.

11. The MEMS sensor of any one of the claims 1 to 10, wherein said first width (98) and said second width (102) are oriented substantially parallel to said surface (28) of said substrate (26), and said second width (102) of said bar elements (68) is oriented substantially parallel to said axis of rotation (52).

**Patentansprüche**

1. Ein mikroelektromechanischer System, MEMS, Sensor aufweisend:

ein Substrat (26);

ein bewegbares Element (36), welches positioniert ist in räumlich getrenntem Verhältnis über einer Oberfläche (28) von dem Substrat (26);

einen Suspensionsanker (34), welcher geformt ist auf der Oberfläche (28) von dem Substrat (26);

einen ersten rigiden Träger (38), welcher gekoppelt ist zu dem Suspensionsanker (34) und positioniert ist in räumlich getrenntem Verhältnis über der Oberfläche (28) von dem Substrat (26);

einen zweiten rigiden Träger (40), welcher gekoppelt ist zu dem Suspensionsanker (34) und positioniert ist in räumlich getrenntem Verhältnis über der Oberfläche (28) von dem Substrat (26),

wobei der erste und zweite rigide Träger (38, 40) ausgerichtet sind zueinander entlang einer Rotationsachse (52) von dem bewegbaren Element (36);

eine erste Torsionsfeder (42), welche verbindet das bewegbare Element (36) mit dem ersten rigiden Träger (38); und

eine zweite Torsionsfeder (44), welche verbindet das bewegbare Element (36) mit dem zweiten rigiden Träger (40),

wobei die erste Torsionsfeder (42) eine erste gefaltete Torsionsfeder ist,
wobei die zweite Torsionsfeder (44) eine zweite gefaltete Torsionsfeder ist,
wobei jede von der ersten und der zweiten Torsionsfeder (42, 44) angeordnet ist generell parallel zu der Rotationsachse (52),
**dadurch gekennzeichnet, dass**

jede von der ersten und zweiten gefalteten Torsionsfeder (42, 44) ferner aufweist

multiple Segmente (66), welche eine erste Länge (96) und eine erste Breite (98) haben,

wobei die erste Länge (96) ausgerichtet ist im Wesentlichen parallel zu der Rotationsachse (52); und

Stabelemente (68), welche verknüpfen die multiplen Segmente (66) in gewundener Art und Weise,
jeder von dem ersten und zweiten rigiden Träger (38, 40) eine Trägerlänge (104) und eine Trägerbreite (106) hat, wobei die Trägerlänge (104) ausgerichtet ist parallel zu der Rotationsachse (52), die Trägerbreite (106) senkrecht zu der Rotationsachse (52) ist und die Trägerlänge (104) größer ist als die erste Länge (96) von den multiplen Segmenten (66), und

die Trägerbreite (106) ausreichend groß ist zum Bereitstellen der Rigidität, welche benötigt wird zum effizienten Reduzieren oder weitgehenden Verhindern von lateraler Bewegung während eines multidirektionalen Überlastzustandes.

2. Der MEMS Sensor gemäß Anspruch 1,
wobei der Suspensionsanker (34) lokalisiert ist in der Rotationsachse (52) und zentriert ist zwischen einer ersten und zweiten Seite (58, 60) von dem bewegbaren Element (36),
wobei die erst und zweite Seite (58, 60) orientiert sind im Wesentlichen senkrecht zu der Rotationsachse (52).

3. Der MEMS Sensor gemäß Anspruch 1 oder Anspruch 2, wobei:

das bewegbare Element (36) umfasst eine Öffnung (46), welche sich erstreckt durch das bewegbare Element (36),

wobei die Öffnung (46) dargestellt ist mittels eines Innenrand Bereiches (48) von dem bewegbaren Element (36);

der Suspensionsanker (34) zentriert ist in der Öffnung (46);
der erste rigide Träger (38) ein erstes Ende (74) und ein zweites Ende (76) hat, wobei das erste Ende (74) gekoppelt ist zu einer ersten Seite (82) von dem Suspensionsanker (34);
der zweite rigide Träger (40) ein drittes Ende (78) und ein viertes Ende (80) hat, wobei das dritte Ende (78) gekoppelt ist zu der zweiten Seite (84) von dem Suspensionsanker (34),

wobei die zweite Seite (84) gegenüberliegend der ersten Seite (82) ist;

die erste Torsionsfeder (42) ein erstes Federende (86), welches gekoppelt ist zu dem zweiten Ende von dem ersten rigiden Träger (38), und ein zweites Federende (88) hat, welches gekoppelt ist zu dem Innenrand Bereich (48) von dem bewegbaren Element (36); und
die zweite Torsionsfeder (44) ein drittes Federende (90), welches gekoppelt ist zu dem vierten Ende (80) von dem zweiten rigiden Träger (40), und ein viertes Federende (92) hat, welches gekoppelt ist zu dem Innenrand Bereich (48) von dem bewegbaren Element (36).

4. Der MEMS Sensor gemäß irgendeinem der Ansprüche 1 bis 3, wobei

die Stabelemente (68) eine zweite Länge (100) und eine zweite Breite (102) haben,
die erste Länge (100) von den Stabelementen (68) orientiert ist approximativ senkrecht zu der ersten Länge (96) von den multiplen Segmenten (66),
die zweite Länge (100) geringer ist als die erste Länge (96), und
die zweite Breite (102) größer ist als die erste Breite (98).

5. Der MEMS Sensor gemäß Anspruch 4,
wobei die zweite Breite (102) von den Stabelementen (68) orientiert ist im Wesentlichen parallel zu der Rotationsachse (52).

6. Der MEMS Sensor gemäß Anspruch 4 oder Anspruch 5,
wobei die erste Breite (98) und die zweite Breite (102) orientiert sind im Wesentlichen parallel zu der Oberfläche (28) von dem Substrat (26).

7. Der MEMS Sensor gemäß irgendeinem der Ansprüche 1 bis 6, wobei:

die erste gefaltete Torsionsfeder (42) ein erstes Federende (86) hat, welches gekoppelt ist zu dem ersten rigiden Träger (38); und
die zweite gefaltete Torsionsfeder (44) ein drittes Federende (90) hat, welches gekoppelt ist zu dem zweiten rigiden Träger (40),

wobei jede von dem ersten und zweiten Federende (86, 88) versetzt ist weg von und auf gegenüberliegenden Seiten von der Rotationsachse (52) mittels einer im Wesentlichen äquivalenten Distanz.

8. Der MEMS Sensor gemäß irgendeinem der Ansprüche 1 bis 7, wobei:

jeder von dem ersten und zweiten rigiden Träger (38, 40) eine erste laterale Steifigkeit hat kennzeichnend eines von Unbiegsamkeit und Rigidität von dem ersten und zweiten rigiden Träger (38, 40) in einer Richtung im Wesentlichen parallel zu der Oberfläche (28) von dem Substrat (26); und
jede von der ersten und zweiten Torsionsfeder (42, 44) eine zweite laterale Steifigkeit hat kennzeichnend eines von Unbiegsamkeit und Rigidität von der ersten und zweiten Torsionsfeder (42, 44) in der Richtung im Wesentlichen parallel zu der Oberfläche (28) von dem Substrat (26),

wobei die erste laterale Steifigkeit größer ist als die zweite laterale Steifigkeit.

9. Der MEMS Sensor gemäß irgendeinem der Ansprüche 1 bis 8, wobei:

die Rotationsachse (52) positioniert ist zwischen und orientiert ist im Wesentlichen parallel zu erstem und zweitem Ende (54, 56) von dem bewegbaren Element (36);
das bewegbare Element (36) umfasst erste und zweite gegenüberliegende Seiten (58, 60), welche verbunden sind zwischen den ersten und zweiten Enden (54, 56) und orientiert sind im Wesentlichen senkrecht zu der Rotationsachse (52); und
das bewegbare Element (36) **gekennzeichnet ist durch** eine Breite (70), welche sich erstreckt zwischen der ersten und zweiten Seite (58, 60), und eine Länge (72), welche sich erstreckt zwischen dem ersten und zweiten Ende (58, 60),

wobei die Breite (70) größer ist als die Länge (72).

10. Der MEMS Sensor gemäß Anspruch 9,
wobei ein Aspektverhältnis von der Breite (70) zu der Länge (72) in einem Bereich von 1,2 bis 2 ist.

11. Der MEMS Sensor gemäß irgendeinem der Ansprüche 1 bis 10, wobei

die erste Breite (98) und die zweite Breite (102) orientiert sind im Wesentlichen parallel zu der Oberfläche (28) von dem Substrat (26), und
die zweite Breite (102) von den Stabelementen (68) orientiert ist im Wesentlichen parallel zu der Rotationsachse (52).

## Revendications

1. Capteur à systèmes microélectromécaniques, MEMS, comprenant :

un substrat (26) ;
un élément mobile (36) positionné en relation espacée au-dessus d'une surface (28) dudit substrat (26) ;
une ancre de suspension (34) formée sur ladite surface (28) dudit substrat (26) ;
une première poutre rigide (38) couplée à ladite ancre de suspension (34) et positionnée en relation espacée au-dessus de ladite surface (28) dudit substrat (26) ;
une deuxième poutre rigide (40) couplée à ladite ancre de suspension (34) et positionnée en relation espacée au-dessus de ladite surface (28) dudit substrat (26), lesdites première et deuxième poutres rigides (38, 40) étant alignées l'une avec l'autre le long d'un axe de rotation (52) dudit élément mobile (36) ;
un premier ressort de torsion (42) interconnectant ledit élément mobile (36) avec ladite première poutre rigide (38) ; et
un deuxième ressort de torsion (44) interconnectant ledit élément mobile (36) avec ladite deuxième poutre rigide (40),
ledit premier ressort de torsion (42) étant un premier ressort de torsion plié, ledit deuxième ressort de torsion (44) étant un deuxième ressort de torsion plié, chacun desdits premier et deuxième ressorts de torsion (42, 44) étant disposé de façon généralement parallèle audit axe de rotation (52),
**caractérisé en ce que**
chacun desdits premier et deuxième ressorts de torsion pliés (42, 44) comprend en outre de multiples segments (66) ayant une première longueur (96) et une première largeur (98), ladite première longueur (96) étant alignée de façon sensiblement parallèle audit axe de rotation (52) ; et des éléments de barre (68) reliant lesdits multiples segments (66) à la manière d'un serpentin,

chacune desdites première et deuxième poutres rigides (38, 40) a une longueur de poutre (104) et une largeur de poutre (106), ladite longueur de poutre (104) étant alignée parallèlement audit axe de rotation (52), ladite largeur de poutre (106) étant perpendiculaire à l'axe de rotation (52), et ladite longueur de poutre (104) étant supérieure à ladite première longueur (96) desdits multiples segments (66), et

ladite largeur de poutre (106) est suffisamment grande pour fournir la rigidité nécessaire pour réduire efficacement ou en grande partie empêcher un déplacement latéral pendant un état de surcharge multidirectionnelle.

2. Capteur MEMS de la revendication 1 dans lequel ladite ancre de suspension (34) est située au niveau dudit axe de rotation (52) et est centrée entre des premier et deuxième côtés (58, 60) dudit élément mobile (36), lesdits premier et deuxième côtés (58, 60) étant orientés de façon sensiblement perpendiculaire audit axe de rotation (52).

3. Capteur MEMS de la revendication 1 ou la revendication 2, dans lequel :

ledit élément mobile (36) comporte une ouverture (46) s'étendant à travers ledit élément mobile (36), ladite ouverture (46) étant délimitée par une partie de bord intérieur (48) dudit élément mobile (36) ;

ladite ancre de suspension (34) est centrée dans ladite ouverture (46) ;

ladite première poutre rigide (38) a une première extrémité (74) et une deuxième extrémité (76), ladite première extrémité (74) étant couplée à un premier côté (82) de ladite ancre de suspension (34) ;

ladite deuxième poutre rigide (40) a une troisième extrémité (78) et une quatrième extrémité (80), ladite troisième extrémité (78) étant couplée à un deuxième côté (84) de ladite ancre de suspension (34), ledit deuxième côté (84) étant à l'opposé dudit premier côté (82) ;

ledit premier ressort de torsion (42) a une première extrémité de ressort (86) couplée à ladite deuxième extrémité de ladite première poutre rigide (38) et une deuxième extrémité de ressort (88) couplée à ladite partie de bord intérieur (48) dudit élément mobile (36) ; et

ledit deuxième ressort de torsion (44) a une troisième extrémité de ressort (90) couplée à ladite quatrième extrémité (80) de ladite deuxième poutre rigide (40) et une quatrième extrémité de ressort (92) couplée à ladite partie de bord intérieur (48) dudit élément mobile (36).

4. Capteur MEMS de l'une quelconque des revendications 1 à 3,
dans lequel lesdits éléments de barre (68) ont une deuxième longueur (100) et une deuxième largeur (102), ladite deuxième longueur (100) desdits éléments de barre (68) étant orientée de façon approximativement perpendiculaire à ladite première longueur (96) desdits multiples segments (66), ladite deuxième longueur (100) étant inférieure à ladite première longueur (96), et ladite deuxième largeur (102) étant supérieure à ladite première largeur (98).

5. Capteur MEMS de la revendication 4, dans lequel ladite deuxième largeur (102) desdits éléments de barre (68) est orientée de façon sensiblement parallèle audit axe de rotation (52).

6. Capteur MEMS de la revendication 4 ou la revendication 5, dans lequel ladite première largeur (98) et ladite deuxième largeur (102) sont orientées de façon sensiblement parallèle à ladite surface (28) dudit substrat (26).

7. Capteur MEMS de l'une quelconque des revendications 1 à 6, dans lequel :

ledit premier ressort de torsion plié (42) a une première extrémité de ressort (86) couplée à ladite première poutre rigide (38) ; et

ledit deuxième ressort de torsion plié (44) a une troisième extrémité de ressort (90) couplée à ladite deuxième poutre rigide (40), chacune desdites première et deuxième extrémités de ressort (86, 88) étant éloignée et sur des côtés opposés dudit axe de rotation (52) par une distance sensiblement équivalente.

8. Capteur MEMS de l'une quelconque des revendications 1 à 7, dans lequel :

chacune desdites première et deuxième poutres rigides (38, 40) a une première raideur latérale caractérisant une inflexibilité ou une rigidité desdites première et deuxième poutres rigides (38, 40) dans une direction sensiblement parallèle à ladite surface (28) dudit substrat (26) ; et

chacun desdits premier et deuxième ressorts de torsion (42, 44) a une deuxième raideur latérale caractérisant une inflexibilité ou une rigidité desdits premier et deuxième ressorts de torsion (42, 44) dans ladite direction sensiblement parallèle à ladite surface (28) dudit substrat (26), ladite première raideur latérale étant supérieure à ladite deuxième raideur latérale.

9. Capteur MEMS de l'une quelconque des revendications 1 à 8, dans lequel :

ledit axe de rotation (52) est positionné entre et orienté de façon sensiblement parallèle à des première et deuxième extrémités (54, 56) dudit élément mobile (36) ;
ledit élément mobile (36) comporte des premier et deuxième côtés opposés (58, 60) interconnectés entre lesdites première et deuxième extrémités (54, 56) et orientés de façon sensiblement perpendiculaire audit axe de rotation (52) ; et
ledit élément mobile (36) est **caractérisé par** une largeur (70) s'étendant entre lesdits premier et deuxième côtés opposés (58, 60) et une longueur (72) s'étendant entre lesdites première et deuxième extrémités (54, 56), ladite largeur (70) étant supérieure à ladite longueur (72) .

10. Capteur MEMS de la revendication 9, dans lequel un rapport de forme de ladite largeur (70) à ladite longueur (72) se situe dans une gamme de 1,2-2.

11. Capteur MEMS de l'une quelconque des revendications 1 à 10, dans lequel ladite première largeur (98) et ladite deuxième largeur (102) sont orientées de façon sensiblement parallèle à ladite surface (28) dudit substrat (26), et ladite deuxième largeur (102) desdits éléments de barre (68) est orientée de façon sensiblement parallèle audit axe de rotation (52).

# FIG . 1

**FIG . 2**

**FIG . 3**

## FIG . 4

## FIG . 5

44

**EP 3 151 018 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013104928 A1
- WO 2013050752 A1
- EP 2479580 A1